# EUROPÄISCHE PATENTSCHRIFT

(11) **EP 3 646 127 B1**
(45) Veröffentlichungstag und Bekanntmachung des Hinweises auf die Patenterteilung: **29.05.2024**
(21) Anmeldenummer: 18743406.3
(22) Anmeldetag: 29.06.2018
(51) Int. Cl.: G05D 1/00

(54) **ROLLSTUHL-SONDERSTEUERUNG**
SPECIALIST CONTROL FOR A WHEELCHAIR
COMMANDE SPÉCIALE POUR FAUTEUIL ROULANT

(30) Priorität: 29.06.2017 DE 102017114569
(43) Veröffentlichungstag der Anmeldung: 06.05.2020
(73) Patentinhaber: Munevo GmbH, 80992 München (DE)
(72) Erfinder: HIDAS, Claudiu, 80798 München (DE); BARON, Julius, 80337 München (DE); TRIVEDI, Aashish, 81369 München (DE); PANDEY, Deepesh, 80687 München (DE); MADAUS, Konstantin, 80796 München (DE)
(74) Vertreter: Meissner Bolte Partnerschaft mbB
(86) Internationale Anmeldenummer: PCT/EP2018/067686
(87) Internationale Veröffentlichungsnummer: WO 2019/002597

(56) Entgegenhaltungen:
- EP-A1- 3 076 906
- US-A1- 2012 143 400
- US-B1- 9 442 631
- Martin Haldenmair: "So steuert man mit Google Glass einen Rollstuhl", , 15. Mai 2015 (2015-05-15), XP055508600, Gefunden im Internet: URL:https://www.galileo.tv/tech-trends/so- steuert-man-mit-google-glass-einen-rollstu hl/ [gefunden am 2018-09-20]
- Simon Burfield: "LEGO MINDSTORMS WheelChair controlled via Google Glass", Youtube, 7. Januar 2015 (2015-01-07), Seite 1, XP054978704, Gefunden im Internet: URL:https://www.youtube.com/watch?v=bLfAPY RhwO4 [gefunden am 2018-09-20]
- Anonymous: "Android App to remotely control a robot with the accelerometer via bluetooth | Robots en la UPV", , 17. Juli 2015 (2015-07-17), XP055508712, Gefunden im Internet: URL:http://robotica.webs.upv.es/en/android -app-robot-accelerometer-bluetooth/ [gefunden am 2018-09-21]

## Beschreibung

Die Erfindung betrifft eine Sondersteuerung für einen elektrischen Rollstuhl, umfassend ein Element zur Eingabe von Befehlen (Eingabeelement) und eine Adapterbox zur Übertragung von Daten des Eingabeelements an ein Input-/ Output-Modul des elektrischen Rollstuhls.

Manchen Patienten, die auf einen Rollstuhl angewiesen sind, ist es nicht zumutbar oder nicht möglich, den Rollstuhl mit eigener Muskelkraft zu bewegen. Ein elektrisch betriebener Rollstuhl stellt für diese Patienten dann ein geeignetes Mittel zur Fortbewegung dar. Bestimmte auf einen elektrischen Rollstuhl angewiesene Patienten sind zudem körperlich derart eingeschränkt, dass sie auf eine Sondersteuerung des Rollstuhls angewiesen sind. Unter Sondersteuerungen werden dabei allgemein alle Arten von Steuerungen verstanden, die von einer Standardsteuerung beziehungsweise einer Standardbedienung des Rollstuhls über ein Standardfahrerpult mit Joystick abweichen.

Aus dem Stand der Technik sind Sondersteuerungen, insbesondere Blas-Saug-Steuerungen sowie Steuerungen mittels spezieller Joysticks, zur Steuerung eines elektrischen Rollstuhls bekannt. Hierzu gehören sogenannte Head-Arrays und Kinnsteuerungen, mit denen beispielsweise querschnittsgelähmte Patienten in der Lage sind, einen elektrischen Rollstuhl mit Hilfe des Kopfes zu steuern. Zur Steuerung werden entweder die dem Patienten verbliebene Kopfbewegung oder auch sonstige verbliebene Körperfunktionen, wie beispielsweise die Atmung, genutzt, um entsprechende Fahrbefehle an den Rollstuhl zu senden.

Bei den vorbekannten Lösungen wird in der Regel die primäre Erfassung der Fahrbefehle, beispielsweise die Bewegung des Kinns, im Wesentlichen über spezielle Bauteile (Hardware) realisiert. Die bekannten Sondersteuerungen bestehen somit aus verschiedenen Bauteilen, die entweder am Rollstuhl und/oder am Patienten selbst montiert werden müssen. Durch diese Bauteile soll zunächst eine verlässliche Erfassung der Fahrbefehle des Patienten ermöglicht werden. Externe Steuerungseinheiten, die über Schnittstellen an die Bauteile zur Erfassung der Fahrbefehle angebunden sind, setzen die Fahrbefehle dann über einen eingebauten Motor in tatsächliche Bewegungen des Rollstuhls um. Die bekannten Sondersteuerungen werden in der Regel von Sanitätshäusern an Endkunden verkauft und an die Bewegungsmuster des jeweiligen Patienten mehr oder weniger starr angepasst.

Bei vielen vorbekannten Sondersteuerungen erfolgt eine initiale Anpassung der Steuerungsparameter an den jeweiligen Patienten. Bei Blas-Saug-Steuerungen, hier steuert der Patient den Rollstuhl durch Saugen und Blasen an einem Röhrchen, erfolgt beispielsweise die Anpassung dahingehend, wie stark der Patient an dem Röhrchen saugen beziehungsweise in das Röhrchen blasen muss, um eine bestimmte Bewegung des Rollstuhls auszulösen.

Bei Kinnsteuerungen, hier steuert der Patient den Rollstuhl mit Hilfe eines vor dem Kinn angebrachten Joysticks, erfolgen initial die Positionierung der Joysticks und die Einstellung, wie sensibel die Joysticks auf Berührungen des Patienten reagieren sollen. Ähnliche Einstellungen sind auch bei Sondersteuerungen über sonstige Joysticks notwendig, die der Patient beispielsweise mit der Hand oder dem Fuß bedienen kann.

Aus dem Internetartikel "So steuert man mit Google Glass einen Rollstuhl" von Martin Haldenmair, abgerufen am 15. Mai 2015, XP055508600, ist bekannt, einen elektrischen Rollstuhl mittels einer Datenbrille mit integrierten Sensoren zu steuern.

Aus der EP 3 076 906 A1 ist eine Steuerung für einen elektrischen Rollstuhl bekannt, die eine erste Sensoreinheit, eine zweite Sensoreinheit und eine Steuereinheit umfasst. Dabei wird die erste Sensoreinheit am Körper des Benutzers getragen, die zweite Sensoreinheit ist am Rollstuhl befestigt. Die Steuereinheit ist dazu ausgebildet, ein Steuersignal basierend auf der Kombination der Signale der ersten und zweiten Sensoreinheiten zu erzeugen.

Auch aus der US 2012/143400 A1 ist eine Rollstuhlsteuerung bekannt, bei welcher der Nutzer ein Sensorelement am Kopf trägt.

Das Youtube-Video "LEGO MINDSTORMS WheelChair controlled via Google Glass", abgerufen am 7. Januar 2015, XP054978704, zeigt ebenfalls die Steuerung eines elektrischen Rollstuhls mittels einer Datenbrille, die integrierte Sensoren aufweist.

Der Internetartikel "Android App to remotely control a robot with the accelerometer via bluetooth", abgerufen am 17. Juli 2015, XP055508712, beschreibt, wie ein Roboter mittels einer Smartphone-Applikation und Beschleunigungssensoren, die in dem Smartphone verbaut sind, gesteuert werden kann.

Die US 9 442 631 B1 beschreibt ein Verfahren zur Navigation durch grafische Menüs mit Hilfe einer Datenbrille.

Die vorbekannten Systeme weisen jedoch eine oder mehrere der folgenden Nachteile auf.

Für die bekannten Sondersteuerungen ist teilweise die Montage dedizierter Hardware am Rollstuhl nötig. Dies ist aufwändig, teuer und führt in aller Regel zudem zu Einbußen bei der Ästhetik des Rollstuhls und dem Komfort für den Patienten.

Die hohen Produktionskosten bekannter Sondersteuerungen führen zu hohen Endkundenpreisen. Durch die hohen Endkundenpreise sind bekannte Sondersteuerungssysteme nur für Personen beziehbar, die die Kosten von der Krankenkasse erstattet bekommen oder privat über entsprechende finanzielle Mittel verfügen.

Leider verlaufen viele Krankheiten, die einen Patienten an den Rollstuhl binden, progressiv. Dies macht regelmäßig Nachjustierungen, nämlich die nachträgliche Anpassungen der Bauteile (Hardware) oder neue Einstellungen der Steuerungsparameter (Software), erforderlich. Diese Neujustierungen sind zeitintensiv und werden nur teilweise aus Kulanz kostenfrei vorgenommen.

Durch den Hardware-Fokus bekannter Systeme fehlen diesen sämtliche Feedbackmechanismen beziehungsweise Sicherheitsvorkehrungen, die ungewollt ausgelöste Steuerungssignale beziehungsweise die Umsetzung solcher Signale in Bewegungen des Rollstuhls, beispielsweise eine Kollision mit der Wand oder das Herunterfahren von Treppen oder hohen Stufen, zuverlässig verhindern.

Nachteilig an vorbekannten Sondersteuerungssystemen ist auch, dass diese Sondersteuerungen in der Regel sehr stark auf eine bestimmte Bedienweise und somit sehr stark auf eine bestimmte (verbliebene) Fähigkeit des Patienten ausgerichtet sind, was auch die hohe Anzahl an jeweiligen Kontraindikationen erklärt. Dies kann dazu führen, dass ein Patient bei einer Veränderung seines Gesundheitszustandes gegebenenfalls immer wieder neue Systeme erwerben und auch erlernen muss.

Bestimmte Sondersteuerungen können durch eine oft unnatürliche Haltung bei der Bedienung oder bei einer unpassenden Ausrichtung der Bauteile zu Folgeschäden bei dem Patienten führen. Kinnsteuerungen können beispielsweise zu Kieferschmerzen und auch zu dauerhaften Fehlhaltungen führen.

Auch wird die Rollstuhlsteuerung über bekannte Sondersteuerungssysteme von vielen Patienten als wenig intuitiv, umständlich und sogar fehlerhaft beschrieben, was eine teils langwierige Lernphase notwendig macht und zu unfallrelevanten Situationen führen kann.

Nicht zuletzt können bekannte Sondersteuerungen nur dazu verwendet werden, die Rollstuhlfunktionen an sich zu bedienen. Um beispielweise auch eine Umfeldsteuerung (Smart Home) vom Rollstuhl aus vorzunehmen, ist weiteres Zubehör nötig.

Es ist Aufgabe der Erfindung, ausgehend von dem oben genannten Internetartikel "So steuert man mit Google Glass einen Rollstuhl", eine verbesserte Sondersteuerung für elektrische Rollstühle zur Verfügung zu stellen, die zumindest einige der genannten Nachteile des Standes der Technik nicht aufweist.

Gelöst wird diese Aufgabe erfindungsgemäß durch eine Sondersteuerung gemäß Anspruch 1. Ferner wird die Aufgabe gelöst durch die Verwendung einer Sondersteuerung gemäß Anspruch 10. Darüber hinaus erfolgt die Lösung der Aufgabe durch einen elektrischen Rollstuhl gemäß Anspruch 11.

Vorteilhafte Ausgestaltungen sind jeweils Gegenstand der abhängigen Ansprüche. Es ist darauf hinzuweisen, dass die in den Ansprüchen einzeln aufgeführten Merkmale auch in beliebiger und technologisch sinnvoller Weise miteinander kombiniert werden können und somit weitere Ausgestaltungen der Erfindung aufzeigen.

Eine erfindungsgemäße Sondersteuerung umfasst ein Element zur Eingabe von Befehlen (Eingabeelement), und zwar ein tragbares Computersystem (Wearable) mit Sensoren, nämlich eine Datenbrille (SmartGlass), eine Adapterbox zur Übertragung der Daten des Wearables an ein Input-/ Output-Modul des elektrischen Rollstuhls, und optional weitere Sensoren insbesondere zur Anbringung an dem mit der Sondersteuerung zu steuernden Rollstuhl. Der Begriff "elektrischer Rollstuhl" ist im Sinne dieser Erfindung stellvertretend für alle motorisierten Rollstühle zu verstehen, deren Antrieb also keine Muskelkraft erfordert. Für die Bedienung der Sondersteuerung hingegen kann eine gewisse Muskelkraft notwendig sein. Das Input-/ Output-Modul des elektrischen Rollstuhls ist eine definierte Schnittstelle zu dessen elektrischem Antriebs- und Lenkungssystem.

Als erfindungsgemäß eingesetztes Wearable eignet sich insbesondere eine Datenbrille, wie der unter der Marke "Google Glass" kommerziell verfügbare, am Kopf getragene Miniaturcomputer des US-amerikanischen Unternehmens Google. Dieses Gerät weist ein optisches Display auf, das in der Peripherie des Sichtfeldes auf einem Brillenrahmen montiert ist. Die Wahrnehmung von in das Sichtfeld eingeblendeten Informationen ist dabei unabhängig von der Kopfposition.

Die in dem Wearable integrierten Sensoren erfassen die Bewegungen und optional Sprach- oder Lautäußerungen des Rollstuhlfahrers. Die erfassten Daten werden von einer Applikation in dem Wearable in entsprechende Fahrbefehle umgerechnet. Geeignete Sensoren in dem Wearable, über die der Patient mit der Sondersteuerung kommunizieren kann, umfassen beispielsweise Bewegungssensoren (beispielsweise Gyroskope) und auditive Sensoren (beispielsweise Mikrofone). Die Daten der verschiedenen Sensoren können auch verknüpft werden (Sensor Fusion), um bei der Auswertung der Eingabe die Qualität und Genauigkeit der Befehle zu steigern.

Das Wearable sendet die Fahrbefehle kabellos (beispielsweise mittels Bluetooth) an die Adapterbox, die an dem zu steuernden Rollstuhl anbringbar ist. Von der Adapterbox werden die Signale dann kabelgebunden oder kabellos an das Input-/ Output-Modul (I/O-Modul) weitergegeben. Die meisten elektrisch betriebenen Rollstühle mit Sondersteuerungen nutzen derzeit bereits standardisierte I/O-Module, sodass die erfindungsgemäße Sondersteuerung über die Adapterbox an die meisten Rollstuhlmodelle sofort anschließbar und sofort einsetzbar ist. Das I/O-Modul ist mit dem Antrieb und der Elektronik des Rollstuhls verbunden und schließt den Steuerungskreis. So kann sich über die Wearable der Rollstuhl bewegen, die Geschwindigkeit des Rollstuhls anpassen oder beispielsweise die Sitzposition verändern lassen.

Ein wesentlicher Vorteil der vorliegenden Erfindung liegt darin, dass die Befehlseingabe nicht mehr an eine komplizierte, teure und individuell justierte Hardware gebunden ist, sondern die Befehlseingabe über ein universelles Eingabemedium, nämlich ein Wearable, erfolgt. So findet ein entscheidender Schritt weg von hochspezialisierten Einzelfalllösungen hin zu einer im Wesentlichen universellen Lösung statt.

Zur Erzeugung von Fahrbefehlen ist das das Wearable zweckmäßig eingerichtet, Signale der integrierten Sensoren nach Maßgabe von im Arbeitsspeicher des Wearable hinterlegten Kalibrierungsdaten in Befehle umzusetzen, die dann an das Input-/Output-Modul des elektrischen Rollstuhls zu dessen Steuerung übertragen werden. Die Kalibrierungsdaten geben z.B. an, wie eine mittels eines integrierten Beschleunigungssensors detektierte Kopfbewegung des Benutzers des Rollstuhls als Fahrbefehl interpretiert wird. Die Kalibrierungsdaten ordnen so z.B. einer bestimmten Richtung der Kopfbewegung eine bestimmte Steuerfunktion zu (z.B. Vorwärts-/Rückwärtsfahrt) und übersetzen die Amplitude der detektierten Kopfbewegung in eine entsprechende proportionale Intensität des Steuerbefehls (0%-100%, d.h. z.B. langsame bis maximal schnelle Vorwärts- oder Rückwärtsfahrt). Sämtliche Parameter dieser Umsetzung sind von den Kalibrierungsdaten umfasst. Die Kalibrierungsdaten sind an die Bewegungsmöglichkeiten des Benutzers mit wenig Aufwand individuell anpassbar.

Das Wearable ist eingerichtet, einen Kalibrierungsmodus zu aktivieren, in dem die Kalibrierungsdaten durch den Benutzer des elektrischen Rollstuhls selbst adaptierbar sind. Der Benutzer des Rollstuhls kann auf diese Weise die Bewegungen, die er beispielsweise für bestimmte Fahrbefehle verwenden möchte, selbstständig anlernen. Falls sich beispielsweise im Krankheitsverlauf oder aufgrund einer schwankenden Tagesform Bewegungsmuster ändern, kann der Patient die Sondersteuerung jederzeit kurzfristig selbst neu kalibrieren. Die erfindungsgemäße Sondersteuerung ist also adaptiv und die aufwändigen Rekonfigurationen - insbesondere auch der Hardware - durch Sanitätshäuser nach dem Kauf entfallen. Der Kunde spart somit nicht nur die dafür erforderliche Zeit ein, sondern gewinnt zusätzlich Lebensqualität und Selbstbestimmung zurück.

Das Wearable ist ein Smart Glass. Der Benutzer kann mit Hilfe des enthaltenen Displays über Kopfbewegungen durch ein angezeigtes Menü navigieren. Über einen Menüpunkt Kalibrierung kann der Benutzer den Kalibrierungsmodus aktivieren und die Kalibrierung sowohl der Fahrgesten als auch der Gesten für die Menüsteuerung vornehmen. Dabei können die Sensorwerte entsprechend den für den Benutzer maximal möglichen oder gewünschten Auslenkungen der verschiedenen Bewegungsgesten ermittelt werden. Die so erfassten Werte jeder Geste können gespeichert werden und definieren die maximale Geschwindigkeit bzw. den engsten Kurvenradius.

Zusätzlich kann der Kalibrierungsmodus genutzt werden, um Schwankungen der Grundposition des Nutzers, die dem Stillstand des Rollstuhls zugeordnet ist, beispielsweise durch Tremore zu erkennen. Diese Grundschwankungen werden dann im nachfolgenden Gebrauch herausgefiltert (s.u.). Die detektierten Sensorsignale in der Grundposition können als Minimalwerte festgelegt werden, deren Überschreitung erst als bewusstes Signal gedeutet und entsprechend weiterverarbeitet wird.

Die Kalibrierung der Steuergesten, die mittels der integrierten Sensoren des Wearables detektiert werden, lässt sich unabhängig von einer vorher festgelegten Richtung durchführen. Der im Kalibrierungsmodus des Wearables ablaufende Algorithmus erkennt den Bewegungsumfang einer Geste sowie dessen Richtung. Das bedeutet, dass der Benutzer in der Lage ist, die Steuerung genau auf seine Bewegungswünsche und -möglichkeiten einzurichten. Z.B. kann der Algorithmus so ausgestaltet sein, dass das Wearable eine Aufforderung erzeugt, während der Kalibrierung den Kopf in eine Position für "Vorwärtsfahren" zu neigen. Der Benutzer kann dann den Kopf in irgendeine Richtung neigen. Die Richtung ist nicht vorgegeben. Menschen mit starken Einschränkungen einer Körperseite beispielsweise haben so die Möglichkeit, selbstständig und unabhängig Rollstuhl zu fahren.

Weiterhin ist das Wearable eingerichtet, die Signale der Sensoren bei der Umsetzung in Befehle zu filtern, in der Weise, dass die Umsetzung in Abhängigkeit von der Amplitude und optional der Änderungsgeschwindigkeit der Signale erfolgt. Z.B. kann das Wearable eingerichtet sein, Signale der Sensoren, deren Amplitude unterhalb eines Amplitudenschwellwertes liegt und/oder deren Änderungsgeschwindigkeit oberhalb eines Geschwindigkeitsgrenzwertes liegt, nicht in Befehle umzusetzen, die an das Input-/Output-Modul des elektrischen Rollstuhls übertragen werden. Die Steuerung über das Wearable ermöglicht somit die Filterung von Spasmen und anderen ruckartigen/schnellen Bewegungen. Z.B. für Nickbewegungen, detektiert mit Hilfe eines integrierten Gyroskops, werden Sensordaten direkt mit in den Kalibrierungsdaten enthaltenen Schwellwerten verglichen. Auch für die proportionalen Fahrgesten, die mit Hilfe von Beschleunigungssensoren ermittelt werden, ist eine Filterung hinsichtlich der Änderungsgeschwindigkeit der Sensorsignale möglich. Dies geschieht z.B. über Vergleiche zweier zeitlich direkt aufeinanderfolgender Werte des betreffenden Sensorsignals. Befindet sich die Differenz der aufeinanderfolgenden Werte oberhalb eines Schwellwertes, ist die Bewegung zu schnell und eine Signal-Weiterverarbeitung findet nicht statt.

Diese Filtermöglichkeiten bieten auch Menschen mit Spastiken eine notwendige Sicherheit beim Steuern von elektrischen Rollstühlen über die Kopfbewegung generell und speziell mit Hilfe von Smartglasses.

Im Falle der erweiterten Bedienung auch einer Umfeldsteuerung (Smart Home) werden die Signale des Wearables via Bluetooth entsprechend an die Steuerungsschnittstelle der Smart-Home-Steuerung gesendet.

In einer bevorzugten Ausführungsform der Sondersteuerung sind zusätzliche Sensoren am Rollstuhl anbringbar, die verhindern sollen, dass der Anwender beispielsweise gegen Hindernisse fährt oder Absätze hinunterstürzt. Solche Sensoren umfassen insbesondere Abstandssensoren, optische Sensoren, wie beispielweise Kameras, akustische Sensoren wie beispielsweise Mikrofone oder Bewegungssensoren. Weitere geeignete Sensoren sind dem Fachmann bekannt und je nach Aufgabenstellung ohne weiteres erfinderisches Zutun durch ihn auswählbar. Die Sensoren können (drahtlos oder drahtgebunden) mit der Adapterbox und/oder mit dem Wearable verbunden sein, wo die Sensordaten entsprechend für die Rollstuhlsteuerung verarbeitet werden.

Bei keiner bekannten Steuerungslösung, auch nicht bei solchen mit Standardpulten mit Joystick, existieren vergleichbare Sicherheitssysteme, die gewährleisten können, dass der Rollstuhlfahrer beispielsweise durch eine unkontrollierte Bewegung oder Lautäußerung, beispielsweise aufgrund einer Spastik, nicht gegen eine Wand oder in einen Abgrund fährt. Über am Rollstuhl verbaute Sensoren können solche Gefahren jedoch erkannt werden. Nähert sich der Rollstuhl beispielsweise einer Wand, einer Treppe oder einem Absatz, wird diese Gefahr durch den oder die Sensoren erkannt und der Rollstuhl automatisch gestoppt. Auch können enge Gänge erkannt und autonom mit Hilfe von Abstandssensoren durchfahren werden.

Bei einer weiteren (nicht beanspruchten) Ausführungsform können für die Objekterkennung zudem Kameras und ein Machine Learning Algorithmus in die Sondersteuerung und/oder das Sicherheitssystem integriert werden. Es handelt sich also um ein lernendes Steuerungs- und Sicherheitssystem, das die erkannten Objekte auswerten und entsprechend nach "Gefahr" oder "keine Gefahr" einordnen kann.

Bei einer weiter bevorzugten Ausgestaltung weist das Wearable eine Kommunikationsschnittstelle zu einem öffentlichen Kommunikations- und/oder Datennetz auf. Es kann sich z.B. über WLAN-Schnittstelle oder um eine Mobilfunkschnittstelle handeln, über die eine mobile Telefon- und/oder Internetverbindung hergestellt werden kann. Das Wearable kann entsprechend eingerichtet sein, bei bestehender Kommunikationsverbindung und in Notfallsituationen Kontakt zu einer vorher definierten Person (gespeicherte E-Mail-Adresse oder Telefonnummer) aufzunehmen. Diese Person wird dann über den Standort des Benutzers des Rollstuhls informiert und kann ihrerseits mit dem Benutzer in Kontakt treten und gegebenenfalls zur Hilfe kommen. Dies ermöglicht dem Benutzer des Rollstuhls eine erhöhte Privatsphäre, da nicht dauernd eine Hilfsperson anwesend sein muss, bei gleichzeitig erhöhter Sicherheit.

Eine weitere Art der Kontaktaufnahme für Rollstuhlfahrer besteht über die Telefonfunktion. Der Nutzer der Smartglass kann darüber selbstständig mit anderen Menschen telefonieren.

Weiter kann das Wearable, das erfindungsgemäß zur Steuerung eines elektrischen Rollstuhls genutzt wird, ebenso zur Steuerung von externen digitalen Endgeräten, z.B. Smartphone, Computer, Tablet, Smart-Home-Hubs, ohne weiteres/zusätzliches Hardware-Modul verwendet werden. Die Smartglass-Steuerung erlaubt dies dank der Möglichkeit, weitere Applikationen installieren und steuern zu können und dabei die integrierte Bluetooth- oder WLAN-Schnittstelle zu nutzen.

Bevorzugt ist die erfindungsgemäß kabellose Übertragung der Daten des Eingabeelements an die Adapterbox verschlüsselt. Sinnvoll ist insbesondere die Verschlüsselung des Datentransfers über Bluetooth zwischen dem Wearable (Smartglass) als Bedienelement für die Rollstuhlsteuerung und dem Rollstuhl (über die Adapterbox) zur Gewährleistung der Sicherheit des Rollstuhlfahrers. Verbindungen zu einem falschen Eingabegerät in der Umgebung werden verhindert, ebenso wir unautorisierte Zugriffe durch Dritte.

Durch die Vielzahl weiterer Funktionen (beispielsweise rollstuhlgerechte Navigation, Smart-Home-Automation etc.), die in die Sondersteuerung eingebunden werden können, wird durch die erfindungsgemäße Sondersteuerung eine universelle Steuerungseinheit für den Alltag von behinderten Menschen geschaffen.

Ein weiterer wesentlicher Vorteil der vorliegenden Erfindung ist, dass durch die Verwendung von Datenbrillen ein Massenprodukt verwendet wird und somit die Produktionskosten für die Hardware von Nischenprodukten entfallen.

Die Erfindung sowie das technische Umfeld werden nachfolgend anhand der Figur näher erläutert. Es ist darauf hinzuweisen, dass die Figur eine besonders bevorzugte Ausführungsvariante der Erfindung zeigt. Die Erfindung ist jedoch nicht auf die gezeigte Ausführungsvariante beschränkt. Insbesondere umfasst die Erfindung, soweit es technisch sinnvoll ist, beliebige Kombinationen der technischen Merkmale, die in den Ansprüchen aufgeführt oder in der Beschreibung als erfindungsrelevant beschrieben sind.

Es zeigen:
- Figur 1: schematische Darstellung einer Ausführungsform der erfindungsgemäßen Sondersteuerung;
- Figur 2: Ablaufdiagramm der Menüsteuerung mit dem erfindungsgemäßen Wearable per Gesten;
- Figur 3: Ablaufdiagramm der Kalibrierung der Gestensteuerung zur Menüsteuerung;
- Figur 4: Ablaufdiagramm der Fahrsteuerung mit dem erfindungsgemäßen Wearable per Gesten;
- Figur 5: Ablaufdiagramm der Kalibrierung der Gestensteuerung zur Fahrsteuerung.

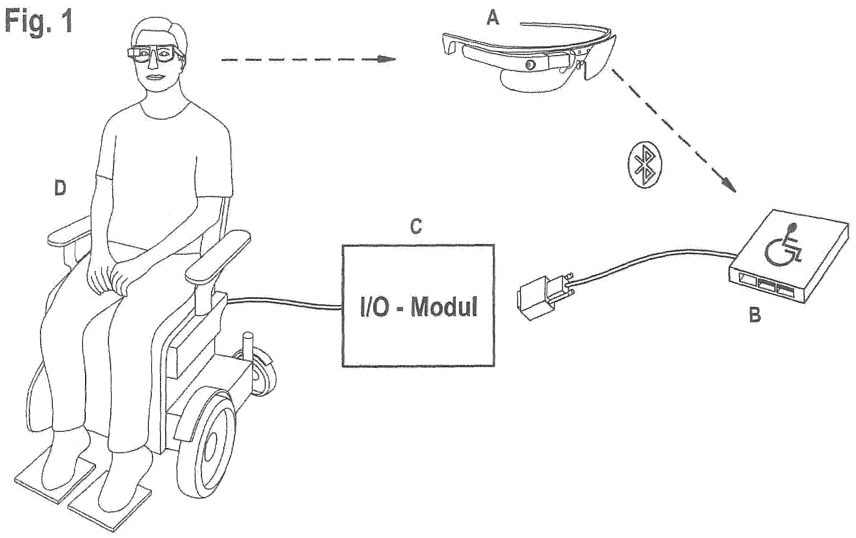

Figur 1 zeigt die Funktionsweise einer bevorzugten Ausführungsform der erfindungsgemäßen Sondersteuerung. Kopfbewegungen und Sprachbefehle des Rollstuhlfahrers werden von der Wearable (A) beispielsweise einer Smartglass (Datenbrille, wie z.B. "Google Glass") erfasst und in einer installierten Applikation zu einem Befehl verrechnet. Die Befehle, beispielsweise Fahrbefehle, werden dann kabellos, beispielsweise via Bluetooth, an die Adapterbox (B) gesendet, von wo sie per Kabel oder kabellos an das Input-/ Output-Modul (C) weitergeleitet werden. Das Input-/ Output-Modul (C) ist mit der Steuerung des Rollstuhls (D) verbunden und schließt den Steuerungskreis. Auf diese Weise lässt sich der Rollstuhl (D) bewegen sowie die Sitzposition und Geschwindigkeit des Rollstuhls (D) anpassen.

Im Falle der Bedienung einer Umfeldsteuerung (Smart Home) werden die Signale des Wearables kabellos, beispielsweise via Bluetooth, an die entsprechende Steuerungsschnittstelle beispielsweise des Smart Homes gesendet.

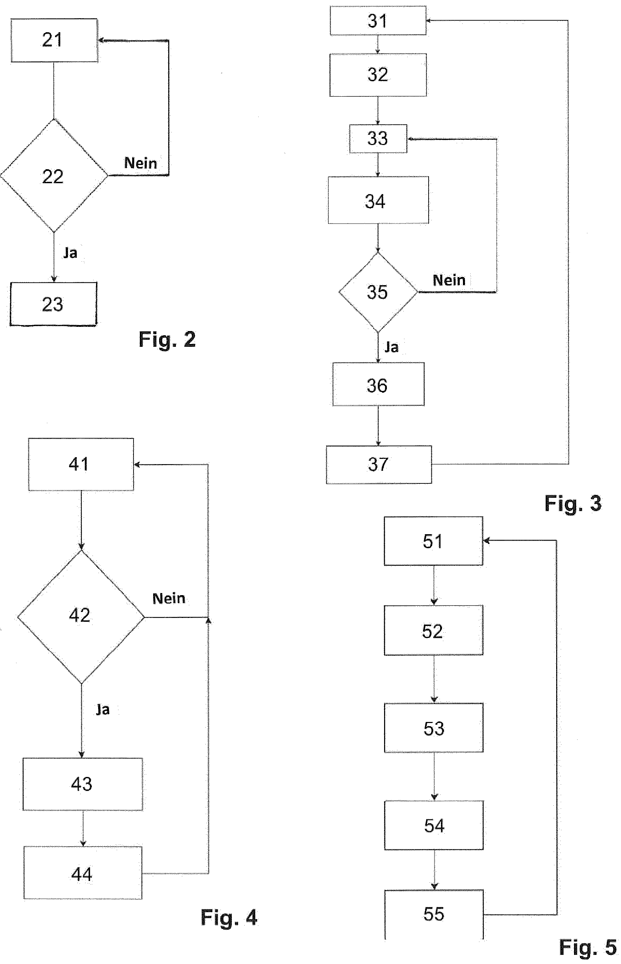

Die Figur 2 illustriert die Implementierung der Gestensteuerung zur Menüsteuerung des Smartglass A. Das Smartglass A blendet in das Sichtfeld des Benutzers eine Menüauswahl ein, wie bei Benutzerschnittstellen von elektronischen Geräten allgemein üblich. In Schritt 21 erfolgt die Abfrage des integrierten Gyroskops des Smartglass A. Im Schritt 22 wird die detektierte momentane Winkelgeschwindigkeit in einer bestimmten Richtung mit einem zuvor per Kalibrierung festgelegten Referenzwert (s.u.) verglichen. Ist die Winkelgeschwindigkeit kleiner als der durch den Referenzwert gegebene Schwellwert kehrt der Algorithmus zurück zur Abfrage des Gyroskops. Anderenfalls wird im Schritt 23 die Detektion einer Nickbewegung und damit eine Menübedienung festgestellt, die, je nach Bedienkontext und Bewegungsrichtung, z.B. eine Menüauswahl oder eine Menünavigation sein kann.

Die Figur 3 illustriert die Kalibrierung der Gestensteuerung für die zuvor beschriebene Gestensteuerung zur Menüsteuerung. Der dargestellte Algorithmus läuft in einem Kalibrierungsmodus ab, den der Benutzer des Rollstuhls D jederzeit aktivieren kann. Im Schritt 31 erfolgt wiederum die Abfrage des Gyroskops. Während eines Zeitraums von z.B. 2-10 Sekunden werden im Schritt 32 die detektieren Winkelgeschwindigkeiten aufgezeichnet, während keine Gesten ausgeübt werden. Die so gewonnenen Referenzwerte geben das Ausmaß der Ruhebewegung des Benutzers an, die z.B. durch einen Tremor bedingt sein kann. Diese Referenzwerte sind Bestandteil der Kalibrierungsdaten und können bei der Detektion von Steuerungsgesten herausgefiltert werden. Im Schritt 33 wird der Benutzer dann aufgefordert, eine bestimmte Bewegung, z.B. eine für eine Menübedienung vorgesehene Nickbewegung auszuführen. Im Schritt 34 wird die bei der Ausführung der Bewegung detektierte maximale Winkelgeschwindigkeit aufgezeichnet. In Schritt 35 wird abgefragt, ob die zu kalibrierende Bewegung bereits *N* mal ausgeführt wurde, wobei N eine beliebige vorgegebene Zahl ist, die die erforderliche Anzahl von Wiederholungen der Geste für die Zwecke der Kalibrierung vorgibt. Im Schritt 36 wird dann die mittlere detektierte Winkelgeschwindigkeit in den N Wiederholungen bestimmt und im Schritt 37 als Schwellwert für die Gestenerkennung in den Kalibrierungsdaten gespeichert. Diese Schritte werden dann für verschiedene Bewegungsrichtungen (z.B. auf, ab, links, rechts) wiederholt.

Figur 4 zeigt das Ablaufdiagramm zur Gestensteuerung der Fahrsteuerung des Rollstuhls D. Im Schritt 41 werden die Beschleunigungssensoren des Smartglass A abgefragt. Im Schritt 42 werden die gemessenen Beschleunigungswerte mit den Referenzwerten der Kalibrierungsdaten verglichen, um festzustellen, ob vom Benutzer tatsächlich eine bewusste Steuerungsgeste ausgeführt wurde oder ob nur eine Ruhebewegung vorliegt. Wenn die gemessenen Werte unterhalb der Referenzwerte liegen, kehrt der Algorithmus zurück zur Sensorabfrage 41. Anderenfalls werden im Schritt 43 die gemessenen Beschleunigungswerte ausgewertet und auf Basis der hinterlegten Kalibrierungsdaten in einen proportionalen Fahrbefehl (z.B. nach Maßgabe des aus den Beschleunigungswerten abgeleiteten momentanen Kopfneigungswinkels) umgesetzt. Im Schritt 44 wird dann der Fahrbefehl an das Input-/ Output-Modul C weitergeleitet, so dass der Rollstuhl D die Bewegung gemäß dem Fahrbefehl ausführt. Danach kehrt der Algorithmus zur Abfrage des Beschleunigungssensors im Schritt 41 zurück.

Die Kalibrierung der Gestensteuerung für die Fahrsteuerung kann wie in Figur 5 dargestellt erfolgen. Im Schritt 51 werden die Beschleunigungssensoren abgefragt. Während eines Zeitraums von z.B. 2-10 Sekunden werden im Schritt 52 die detektieren Beschleunigungswerte aufgezeichnet, während keine Gesten ausgeübt werden. Die so gewonnenen Referenzwerte geben das Ausmaß der Ruhebewegung des Benutzers an, die z.B. durch einen Tremor bedingt sein kann. Diese Referenzwerte sind Bestandteil der Kalibrierungsdaten und werden bei der Detektion der Steuerungsgesten herausgefiltert werden, wie zuvor beschrieben. Im Schritt 53 wird der Benutzer dann aufgefordert, eine bestimmte Bewegung, z.B. eine für eine bestimmte Fahrfunktion (vor, zurück, links, rechts) vorgesehene Kopfneigung einzunehmen. Im Schritt 54 wird die bei der Ausführung der Bewegung detektierte maximale Abweichung von den Referenzwerten bestimmt und als Maximalwert (100%) für die entsprechende Fahrfunktion gespeichert. Dadurch ist das Werteintervall des proportionalen Fahrbefehls (Referenzwert bis Maximalwert) festgelegt, auf das bei der Fahrsteuerung das Ausmaß der jeweils detektierten Bewegung abgebildet wird. In Schritt 55 wird dieser Wert in den Kalibrierungsdaten gespeichert. Der Vorgang wird sodann für die verschiedenen Richtungen wiederholt.

Denkbar ist auch eine dynamische Kalibrierung, bei der das maximale Ausmaß der detektierten Bewegungsgeste (fortlaufend oder zu bestimmten Zeitpunkten) überwacht wird und die Kalibrierungsdaten entsprechend angepasst werden.

## Patentansprüche

1. Sondersteuerung für einen elektrischen Rollstuhl (D), umfassend ein Eingabeelement (A) zur Eingabe von Befehlen und eine Adapterbox (B) zur Übertragung von Daten des Eingabeelements (A) an ein Input-/ Output-Modul (C) des elektrischen Rollstuhls (D),
wobei die Daten des Eingabeelements (A) kabellos an die Adapterbox (B) übertragbar sind und das Eingabeelement (A) ein am Körper tragbares Computersystem, nämlich ein Wearable mit Sensoren, umfasst,
wobei das Wearable ein Smart Glas mit einem Display ist, das dazu ausgebildet ist ein Menü anzuzeigen,
**dadurch gekennzeichnet, dass**
das Wearable eingerichtet ist, Signale der Sensoren nach Maßgabe von im Wearable hinterlegten Kalibrierungsdaten in Befehle umzusetzen, die an das Input-/Output-Modul (C) des elektrischen Rollstuhls (D) übertragen werden,
wobei die Kalibrierungsdaten eine Amplitude einer detektierten Kopfbewegung in eine entsprechende proportionale Intensität des Steuerbefehls übersetzen,
wobei das Wearable dazu ausgebildet ist, über Kopfbewegungen eine Navigation durch das Menü zu erlauben,
wobei das Menü einen Menüpunkt zur Aktivierung eines Kalibrierungsmodus umfasst, über den der Benutzer den Kalibrierungsmodus aktivieren kann, in dem die Kalibrierungsdaten durch den Benutzer des elektrischen Rollstuhls (D) adaptierbar sind und über den der Benutzer eine Kalibrierung sowohl von Kopfbewegungen zur Fahrsteuerung als auch von Kopfbewegungen zur Menüsteuerung vornehmen kann,
wobei die Kalibrierung der Kopfbewegungen zur Fahrsteuerung sich unabhängig von einer vorher festgelegten Richtung durchführen lässt, indem ein im Kalibrierungsmodus ablaufender Algorithmus den Umfang und die Richtung einer Kopfbewegung erkennt.

2. Sondersteuerung nach Anspruch 1, **dadurch gekennzeichnet, dass** das Wearable Sensoren zur Erkennung von Sprache und Bewegung umfasst.

3. Sondersteuerung nach einem der vorherigen Ansprüche, **dadurch gekennzeichnet, dass** die Sondersteuerung weitere Sensoren umfasst, die vorzugsweise am Rollstuhl anbringbar sind.

4. Sondersteuerung nach Anspruch 3, **dadurch gekennzeichnet, dass** die weiteren Sensoren auswählbar sind aus der Gruppe umfassend Abstandssensoren, optische Sensoren, akustische Sensoren, Bewegungssensoren.

5. Sondersteuerung nach Anspruch 4, **dadurch gekennzeichnet, dass** die weiteren Sensoren kabellos oder kabelgebunden mit dem Wearable oder mit der Adapterbox verbindbar sind.

6. Sondersteuerung nach einem der Ansprüche 1 bis 5, **dadurch gekennzeichnet, dass** das Wearable eingerichtet ist, die Signale der Sensoren bei der Umsetzung in Befehle zu filtern, in der Weise, dass die Umsetzung in Abhängigkeit von der Amplitude und/oder der Änderungsgeschwindigkeit der Signale erfolgt.

7. Sondersteuerung nach einem der Ansprüche 1 bis 6, **dadurch gekennzeichnet, dass** das Wearable eingerichtet ist, Signale der Sensoren, deren Amplitude unterhalb eines Amplitudenschwellwertes liegt und/oder deren Änderungsgeschwindigkeit oberhalb eines Geschwindigkeitsgrenzwertes liegt, nicht in Befehle umzusetzen, die an das Input-/Output-Modul des elektrischen Rollstuhls übertragen werden.

8. Sondersteuerung nach einem der Ansprüche 1 bis 7, **dadurch gekennzeichnet, dass** das Wearable eine Kommunikationsschnittstelle zu einem öffentlichen Kommunikations- und/oder Datennetz aufweist.

9. Sondersteuerung nach einem der Ansprüche 1 bis 8, **dadurch gekennzeichnet, dass** die kabellose Übertragung der Daten des Eingabeelements an die Adapterbox verschlüsselt ist.

10. Verwendung einer Sondersteuerung gemäß einem der Ansprüche 1 bis 9 zur Steuerung eines elektrischen Rollstuhls.

11. Elektrischer Rollstuhl, **gekennzeichnet durch** eine Sondersteuerung gemäß einem der Ansprüche 1 bis 9.

## Claims

1. Specialist control for an electric wheelchair (D), comprising an input element (A) for inputting commands and an adapter box (B) for transmitting data of the input element (A) to an input/output module (C) of the electric wheelchair (D),
wherein the data of the input element (A) can be transmitted wirelessly to the adapter box (B) and the input element (A) comprises a computer system which can be worn on the body, namely a wearable with sensors,
wherein the wearable is a smart glass with a display which is designed to display a menu,
**characterized in that**
the wearable is adapted to convert signals from the sensors into commands which are transmitted to the input/output module (C) of the electric wheelchair (D) in accordance with calibration data stored in the wearable, wherein the calibration data translates an amplitude of a detected head movement into a corresponding proportional intensity of the control command, wherein the wearable is designed to allow navigation through the menu via head movements,
wherein the menu comprises a menu item for activating a calibration mode, via which the user can activate the calibration mode, in which the calibration data can be adapted by the user of the electric wheelchair (D) and via which the user can perform a calibration both of head movements for driving control and of head movements for menu control,
wherein the calibration of the head movements for driving control can be performed independently of a predetermined direction **in that** an algorithm running in calibration mode recognizes the extent and direction of a head movement.

2. Specialist control according to claim 1, **characterized in that** the wearable comprises sensors for detecting speech and movement.

3. Specialist control according to one of the preceding claims, **characterized in that** the specialist control comprises further sensors which can preferably be attached to the wheelchair.

4. Specialist control according to claim 3, **characterized in that** the further sensors can be selected from the group comprising distance sensors, optical sensors, acoustic sensors and motion sensors.

5. Specialist control according to claim 4, **characterized in that** the additional sensors can be connected to the wearable or to the adapter box wirelessly or by cable.

6. Specialist control according to one of claims 1 to 5, **characterized in that** the wearable is adapted to filter the signals of the sensors during the conversion into commands, in such a way that the conversion takes place depending on the amplitude and/or the rate of change of the signals.

7. Specialist control according to one of claims 1 to 6, **characterized in that** the wearable is adapted not to convert signals from the sensors whose amplitude is below an amplitude threshold value and/or whose rate of change is above a speed limit value into commands that are transmitted to the input/output module of the electric wheelchair.

8. Specialist control according to one of claims 1 to 7, **characterized in that** the wearable has a communication interface to a public communication and/or data network.

9. Specialist control according to one of claims 1 to 8, **characterized in that** the wireless transmission of the data of the input element to the adapter box is encrypted.

10. Use of a specialist control according to one of claims 1 to 9 for controlling an electric wheelchair.

11. Electric wheelchair, **characterized by** a specialist control according to one of claims 1 to 9.

## Revendications

1. Unité de commande spéciale pour un fauteuil roulant électrique (D), comprenant un élément de saisie (A) pour la saisie d'instructions et un boîtier adaptateur (B) pour la transmission de données de l'élément de saisie (A) à un module d'entrée/sortie (C) du fauteuil roulant électrique (D),
dans laquelle les données de l'élément de saisie (A) peuvent être transmises sans fil au boîtier adaptateur (B) et l'élément de saisie (A) comprend un système d'ordinateur pouvant être porté sur le corps, à savoir un ordinateur prêt-à-porter muni de capteurs,
dans laquelle l'ordinateur prêt-à-porter est un verre connecté avec un afficheur conçu pour afficher un menu,
**caractérisée en ce que** l'ordinateur prêt-à-porter est configuré pour convertir des signaux de capteurs, en fonction de données d'étalonnage enregistrées dans sa mémoire, en ordres qui sont transmis au module d'entrée/sortie (C) du fauteuil roulant électrique (D),
les données d'étalonnage traduisant une amplitude d'un mouvement de la tête détecté en une intensité proportionnelle correspondante de l'instruction de commande,
l'ordinateur prêt-à-porter étant configuré pour permettre une navigation dans le menu à l'aide de mouvements de la tête,
le menu comprenant une rubrique de menu pour l'activation d'un mode d'étalonnage grâce à laquelle l'utilisateur peut activer le mode d'étalonnage, dans lequel les données d'étalonnage peuvent être adaptées par l'utilisateur du fauteuil roulant électrique (D) et l'utilisateur peut procéder à un étalonnage aussi bien de mouvements de la tête pour commander la conduite que de mouvements de la tête pour commander le menu,
l'étalonnage des mouvements de la tête pour commander la conduite pouvant être effectué indépendamment d'un sens défini antérieurement, par le fait qu'un algorithme qui s'exécute dans le mode d'étalonnage reconnaît l'amplitude et le sens d'un mouvement de la tête.

2. Unité de commande spéciale selon la revendication 1, **caractérisée en ce que** l'ordinateur prêt-à-porter comprend des capteurs pour la reconnaissance de la voix et du mouvement.

3. Unité de commande spéciale selon l'une des revendications précédentes, **caractérisée en ce qu'**elle comprend d'autres capteurs qui peuvent de préférence être installés sur le fauteuil roulant.

4. Unité de commande spéciale selon la revendication 3, **caractérisée en ce que** les autres capteurs peuvent être choisis dans le groupe comprenant des détecteurs de distance, des capteurs optiques, des capteurs acoustiques, des détecteurs de mouvement.

5. Unité de commande spéciale selon la revendication 4, **caractérisée en ce que** les autres capteurs peuvent être connectés sans fil ou par câble à l'ordinateur prêt-à-porter ou au boîtier adaptateur.

6. Unité de commande spéciale selon l'une des revendications 1 à 5, **caractérisé en ce que** l'ordinateur prêt-à-porter est configuré pour filtrer les signaux des capteurs lors de la conversion de telle manière que la conversion s'effectue en fonction de l'amplitude et/ou de la vitesse de changement des signaux.

7. Unité de commande spéciale selon l'une des revendications 1 à 6, **caractérisée en ce que** l'ordinateur prêt-à-porter est conçu pour ne pas convertir les signaux des capteurs dont l'amplitude est inférieure à un seuil d'amplitude et/ou dont la vitesse de changement est supérieure à une vitesse limite en instructions transmises au module d'entrée/sortie du fauteuil roulant électrique.

8. Unité de commande spéciale selon l'une des revendications 1 à 7, **caractérisée en ce que** l'ordinateur prêt-à-porter comporte une interface de communication avec un réseau public de communications et/ou de données.

9. Unité de commande spéciale selon l'une des revendications 1 à 8, **caractérisée en ce que** la transmission sans fil des données de l'élément de saisie au boîtier adaptateur est cryptée.

10. Utilisation d'une unité de commande spéciale selon l'une des revendications 1 à 9 pour la commande d'un fauteuil roulant électrique.

11. Fauteuil roulant électrique, **caractérisé en ce qu'**il comporte une unité de commande spéciale selon l'une des revendications 1 à 9.
